# EUROPEAN PATENT SPECIFICATION

(11) **EP 1 402 398 B1**
(45) Date of publication and mention of the grant of the patent: **01.12.2010**
(21) Application number: 01983833.3
(22) Date of filing: 25.10.2001
(51) Int. Cl.: H04M 1/725, H04M 1/60

(54) **ON-LINE MUSIC DATA PROVIDING SYSTEM VIA BLUETOOTH HEADSET**
ONLINE-MUSIKDATENBEREITSTELLUNGSSYSTEM ÜBER EIN BLUETOOTH-HEADSET
SYSTEME FOURNISSEUR DE DONNEES MUSICALES EN LIGNE VIA UN CASQUE BLUETOOTH

(30) Priority: 23.05.2001 KR 2001028430
(43) Date of publication of application: 31.03.2004
(73) Proprietor: KTFreetel Co., Ltd., 135-280 Seoul (KR)
(72) Inventor: AHN, Byung-Koo, Seoul 138-160 (KR); OH, Jae-Duk, Gwacheon-city, Gyeonggi-do 427-050 (KR)
(74) Representative: Winter, Brandl, Fürniss, Hübner, Röss, Kaiser, Polte - Partnerschaft
(86) International application number: PCT/KR2001/001808
(87) International publication number: WO 2002/095612

(56) References cited:
- EP-A- 1 091 543
- EP-A- 1 100 243
- WO-A-00/74350
- WO-A-99/43136
- DE-A1- 19 917 169
- KR-A- 2001 015 972
- KR-A- 2001 058 800
- KR-Y1- 216 321
- KR-Y1- 225 458
- NUSSER R ET AL: "Bluetooth-based wireless connectivity in an automotive environment" VEHICULAR TECHNOLOGY CONFERENCE, 2000. IEEE VTS FALL VTC 2000. 52ND SEPT. 24-28, 2000, PISCATAWAY, NJ, USA,IEEE, vol. 4, 24 September 2000 (2000-09-24), pages 1935-1942, XP010524360 ISBN: 0-7803-6507-0
- "COMBINING TELEPHONY CAPABILITY WITH PORTABLE MUSIC DEVICES" RESEARCH DISCLOSURE, KENNETH MASON PUBLICATIONS, WESTBOURNE, GB, no. 443, March 2001 (2001-03), page 399, XP001126566 ISSN: 0374-4353

## Description

### BACKGROUND OF THE INVENTION

### (a) Field of the Invention

The present invention relates to an online music-data-providing system. More specifically, the present invention relates to an online music-data providing system via a headset.

### (b) Description of the Related Art

As online data transmission speeds have been enhanced because of dissemination of the Internet, online music data distribution services for distributing music files through the Internet have become available.

Also, wireless data terminals such as mobile stations have spread, and accordingly, wireless data communication services, and in particular, wireless Internet services using them, have increased.

The wireless Internet services support terminals that adopt the HTTP (Hyper Text Transfer Protocol) and the WAP (Wireless Application Protocol) to use the wireless Internet.

Recently, Bluetooth, a short range radio communication standard for wirelessly linking a computer and a peripheral device, a mobile station and a computer, and home appliances respectively installed within a short range with each other to thereby enable bidirectional and real-time communication has been adopted, and hardwired modules that realize Bluetooth have been distributed.

A headset as embodied in the present invention is a headphone to which a microphone is provided, and it is used as a hands-free device of a portable terminal such as a mobile station.

However, the headset only carries out the hands-free function of the mobile station, and it fails to provide an online music-data-providing service.

Document EP-A-1 091 543 describes a method of using a cellular telephone for playback of audio signals downloaded from a network. The cellular telephone is connectable to at least one sound reproducing unit in the form of a headset for playback of audio signals. A digitized and compressed audio file is downloaded to the cellular telephone, which decompresses the digitized and compressed audio file, plays it back as audibly perceptible signals via the sound reproducing unit, wherein during telephone calls the sound level of the audibly perceptable signals which are played back from said audio file are reduced and the sound reproducing unit is used for the telephone conversation.

### SUMMARY OF THE INVENTION

It is an object of the present invention to provide an online music-data-providing system for downloading music data to the system through a headset on line and reproducing them in cooperation with an online music source distribution service, a wireless Internet service, and Bluetooth technology.

The object is solved by the features of the independent claim 1. The dependent claims are directed to preferred embodiments of the invention.

### BRIEF DESCRIPTION OF THE DRAWINGS

The accompanying drawings, which are incorporated in and constitute a part of the specification, illustrate an embodiment of the invention, and, together with the description, serve to explain the principles of the invention:
FIG. 1 shows a block diagram of an online music-data-providing system via a headset according to a preferred embodiment of the present invention;
FIG. 2 shows a detailed block diagram of a mobile station and a headset in the online music-data-providing system of FIG. 1; and
FIGs. 3(a) and 3(b) show an operation flowchart of the online music-data-providing system via a headset according to a preferred embodiment of the present invention.

### DETAILED DESCRIPTION OF THE PREFERRED EMBODIMENTS

In the following detailed description, only the preferred embodiment of the invention has been shown and described, simply by way of illustration of the best mode contemplated by the inventor(s) of carrying out the invention. As will be realized, the invention is capable of modification in various obvious respects, all without departing from the invention. Accordingly, the drawings and description are to be regarded as illustrative in nature, and not restrictive.

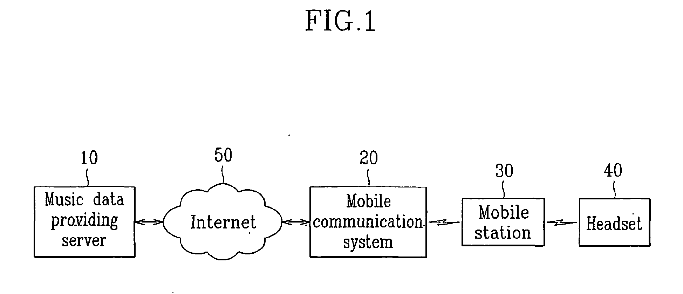

FIG. 1 shows a block diagram of an online music-data-providing system via a headset according to a preferred embodiment of the present invention.

As shown, the online music-data-providing system via a headset comprises a music-data-providing server 10; a mobile communication system 20; a mobile station 30; and a headset 40.

The music-data-providing server 10 stores a plurality of music data, and transmits stored music data to the mobile station through the Internet 50 according to a download request by a member user that is a mobile station user.

The user accesses the music-data-providing server 10 through the mobile station 30. In this instance, the mobile station 30 is wirelessly connected to the mobile communication system 20, and the mobile communication system 20 is connected to the music-data-providing server 10 through the Internet 50.

The headset 40 is connected to the mobile station 30 through a short range radio link by the Bluetooth protocol.

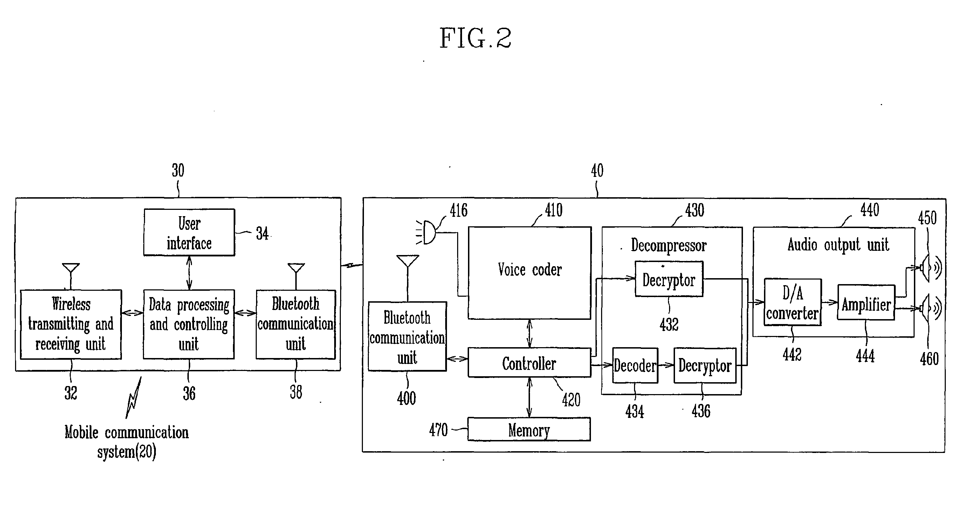

FIG. 2 shows a detailed block diagram of a mobile station 30 and a headset 40 in the online music-data-providing system of FIG. 1.

As shown, the mobile station 30 comprises a wireless transmitting and receiving unit 32; a user interface 34; a data processing and controlling unit 36; and a Bluetooth communication unit 38.

The wireless transmitting and receiving unit 32 enables the mobile station 30 to process data, and enables radio links between the data processing and controlling unit 36 and the mobile communication system 20.

The user interface 34 connects the user to the data processing and controlling unit 36, and it comprises an LCD and a key input device.

The Bluetooth communication unit 38 enables short range radio links by the Bluetooth protocol between the data processing and controlling unit 36 and the headset 40.

The data processing and controlling unit 36 processes the data input by the mobile communication system 20 through the wireless transmitting and receiving unit 32 to output them to the user interface 34 or output them to the headset 40 through the Bluetooth communication unit 38, processes the data input from the headset 40 through the user interface 34 or the Bluetooth communication unit 38 to wirelessly transmit them to the mobile communication system 20 through the wireless transmitting and receiving unit 32, thereby controlling the whole operation of the mobile station 30.

In this instance, the Bluetooth communication unit 38 follows technology specifications, standardized by the Bluetooth SIG (Special Interest Group), a technique standardizing consortium, for short range radio links (2.4GHz ISM Open Band) between portable devices such as a mobile station and a mobile computer and other peripheral devices with small size, low cost, and low power consumption.

The headset 40 comprises a Bluetooth communication unit 400; a voice coder 410; a controller 420; a decompressor 430; an audio output unit 440; speakers 450 and 460; and a microphone 416.

The Bluetooth communication unit 400 enables short range radio links by the Bluetooth protocol between the mobile station 30 and the controller 420 of the headset 40. That is, the Bluetooth communication unit 400 forms a call path by the Bluetooth protocol to the Bluetooth communication unit 38 of the mobile station 30.

The Bluetooth call path includes an asynchronous call path for transmitting data, and a synchronous call path for transmitting voice signals.

The voice coder 410 converts voice signals input through the microphone 416 into digital signals and outputs them to the controller 420, the voice signals being used for browsing contents such as telephone calls on a voice basis.

The decompressor 430 decrypts and decompresses the music data encrypted and compressed by the music-data-providing server 10.

The music-data-providing server 10 may transmit streaming music data and non-streaming general music data according to the user's selection.

The streaming music data may be reproduced when the corresponding data are not completely received, and the general music data may be reproduced when they are completely received.

Therefore, the decompressor 430 decompresses the data differently according to data types input by the music-data-providing server 10, that is, depending on whether it is streaming music data or general music data.

The decompressor 430 comprises a decryptor 432 for decompressing the streaming music data; a decoder 434 for decoding the general music data; and a decryptor 436 for decompressing the data decoded by the decoder 434.

The controller 420 controls the Bluetooth communication unit 400 to form a call path to the Bluetooth communication unit 38 of the mobile station 30, and processes the data input by the mobile station 30 to output them to the decompressor 430, thereby controlling the whole operation of the headset 40.

The audio output unit 440 outputs the music data output by the decompressor 430 so that the user may listen to them through the two speakers 450 and 460. The audio output unit 440 comprises a D/A converter 442 for converting the music data output by the decompressor 430 into analog signals; and an amplifier 444 for amplifying the analog signals output by the D/A converter 442 to output to the speakers 450 and 460.

The controller 420 comprises a memory for storing music data and other data transmitted by the mobile station 30.

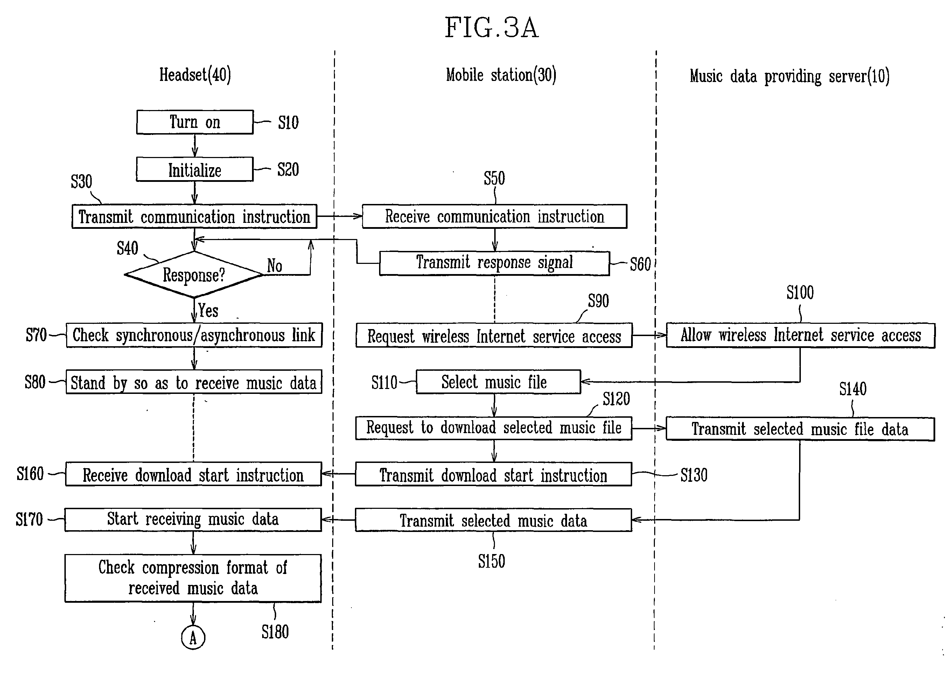

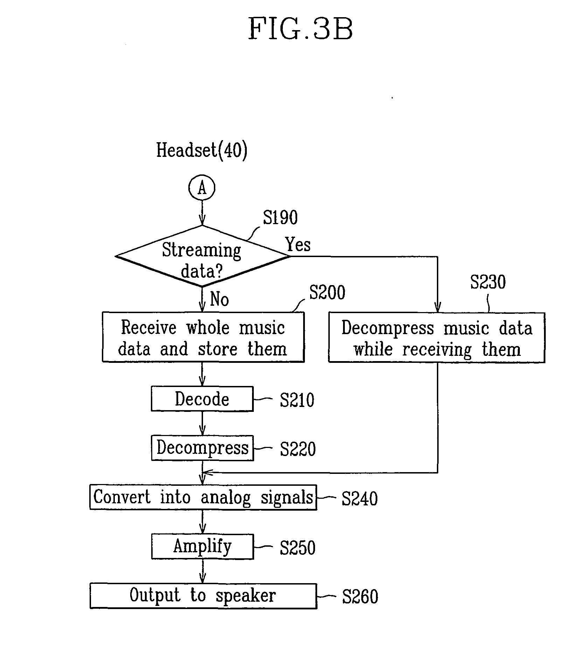

Referring to FIGs. 3(a) and 3(b), an operation of the online music providing system via a headset according to the preferred embodiment of the present invention will now be described.

It is assumed that the user of the mobile station 30 is previously registered to the music-data-providing server 10 through the headset 40. An operation to enter a server or a site that provides predetermined services as a member is obvious to a skilled person.

When the user turns on the headset 40 installed in the car 60 in step S10, the headset 40 performs its own initialization process in step S20.

In this instance, the initialization process enables the controller 420 of the headset 40 to check states of respective components in the headset 40, and the controller 420 provides communication instructions to the Bluetooth communication unit 400 and the mobile station 30 after the initialization process in step S30.

The headset 40 enters a standby state of a response signal from the mobile station 30 in step S40.

The mobile terminal 30 receives the communication instruction from the Bluetooth communication unit 400 of the headset 40 in step S50, and transmits a response signal to the communication instruction to the headset 40 in step S60.

In further detail, when receiving the communication instruction by the Bluetooth communication protocol from the Bluetooth communication unit 400 of the headset 40, the Bluetooth communication unit 38 of the mobile station 30 transmits this fact to the data processing and controlling unit 36, and the data processing and controlling unit 36 controls the Bluetooth communication unit 38 to transmit a response to the communication instruction transmitted by the headset 40 to the Bluetooth communication unit 400 of the headset 40.

The Bluetooth communication unit 400 of the headset 40 receives the response signal from the Bluetooth communication unit 38 of the mobile station 30, transmits the same to the controller 420, and the controller 420 checks synchronous/asynchronous link states to the mobile station 30 in step S70, and when the synchronous/asynchronous link states are normal, it stands by until the music data are downloaded from the mobile station 30 in step S80.

The user requests wireless Internet access from the music-data-providing server 10 through the user's mobile station 30 in step S90, and the music-data-providing server 10 determines whether the user is registered regarding the access request by the mobile station 30, and issues an access allowance in step S100.

When receiving the access allowance from the music-data-providing server 10, the user uses the mobile station 30 to select each desired music file or a plurality of music files in step S110.

The user transmits a request to download the selected music file data to the music-data-providing server 10 in step S120, and concurrently transmits an instruction to the headset 40 to notify of a start of downloading the music data in step S130.

The music-data-providing server 10 wirelessly transmits the selected music file data to the user's mobile station 30 according to the corresponding downloading request through the mobile communication system 20 connected to the Internet 50 in step S140, and the mobile station 30 receives the music file data from the music-data-providing server 10 and transmits them to the headset 40 in step S150.

When receiving the instruction to notify of the start of downloading data from the mobile station in step S160, the controller 420 of the headset 40 stands by so as to receive the music data from the mobile station 30, and when the mobile station 30 transmits the music data, the controller 420 receives the music data, stores them in the memory 470 in step S170, and checks the compression format of the music data in step S180.

When the compression format of the received music data is not the streaming type but the general type in step S190, the controller receives the total music data and stores the same in the memory 470 in step S200.

The decoder 434 of the decompressor 430 decodes the general music data stored in the memory 470 in step S210, and the decryptor 436 decompresses the decoded music data and outputs them to the audio output unit 440 in step S220.

When the compression format of the received music data in the previous step S190 is a streaming type, the controller 420 receives the music data and transmits them to the decompressor 430, and the decryptor 432 of the decompressor 430 decompresses the transmitted music data and outputs them to the audio output unit 440 in step S230.

The D/A converter 442 of the audio output unit 440 converts the digital music data output by the decompressor 430 into analog signals of the audible frequency band, and outputs them in step S240, and the amplifier 444 amplifies the analog signals in step S250, and outputs them so that the user may listen to the same from the two speakers 450 and 460 in step S260.

When a third person calls the user's mobile station 30 while the user is listening to music selected through the headset 40 after the above-described process, in other words, when an external voice call access is requested, the data processing and controlling unit 36 of the mobile station 30 notifies the controller 420 of the headset 40 of the external voice call access request, the controller 420 temporarily or completely stops the present music reproducing operation, and when the user uses the user interface 34 to connect to the external voice call access, the headset 40 operates as a hands-free function of the mobile station 30.

In this instance, the music being reproduced is stopped when the user presses a call button provided to the user interface 34 of the mobile station 30 or presses the same provided to the headset 40. The technical scope of the present invention is not restricted to this, and further various methods may be implemented.

When the user presses the call button (not illustrated) installed in the headset 40, this fact is transmitted to the controller 420, and the controller 420 performs a process depending on the operation status of the headset 40. For example, when the user receives a telephone call request while reproducing the music data, and presses a call button, the music data are stopped temporarily or completely. In the like manner, when the user presses the call button again after the telephone call is finished, the stopped music data may be reproduced again.

When the reproduced music is stopped, an external telephone call connection is performed, and the user speaks through the microphone 416 of the voice coder 410, the voice coder 410 converts the user's voice into corresponding digital signals and outputs them to the controller 420, and the controller 420 transmits the converted voice signals to the mobile station 30 to be transmitted to the third person.

Also, when the third person's voice data are transmitted to the headset 40 through the mobile station 30, the controller 420 outputs the voice data through the speakers 450 and 460 so that the user may listen to the third person's voice.

When someone calls the user while the user is reproducing music data, the user may answer the phone according to the above-noted operation, and the temporarily paused music data may be reproduced according to the user's predetermined action, such as pressing the call button after the telephone call is finished.

In the above, a case when an external call is provided while music data are reproduced is described, and further, when someone calls the user while the user is receiving desired music file data from the music-data-providing server 10, the user may completely or temporarily stop receiving the music file data as described above, answer the phone, and start receiving the music file data that was completely or temporarily stopped after the call is finished.

The headset 40 receives music data and reproduces them as described above, and it further may perform an intercom operation with another headset that enables short range radio links by the Bluetooth protocol.

The intercom function starts when the user presses a call button while the headset is not receiving music data from the music-data-providing server 10 or while it is not reproducing the music data that has been received and is stored, and the controller 420 of the headset 40 searches through the Bluetooth communication unit 400 to determine whether a headset that supports the Bluetooth communication is provided in the vicinity of the controller 420. In this instance, since various types of Bluetooth headsets may be located in its vicinity, it is required to previously set an available ID to determine whether a headset of the corresponding ID is found.

When another available headset is found, that is, when the Bluetooth communication unit 400 receives a response by the Bluetooth protocol from the other headset, the controller 420 generates a call path to the searched headset through the Bluetooth communication unit 400.

When the call path to the headset is generated by the Bluetooth communication unit 400, the controller 420 transmits a dial tone to the user through the speakers 450 and 460 to notify the user of this fact.

After hearing the dial tone through the speakers 450 and 460, the user may call the other headset using the user's own headset 40.

According to the present invention, since the music files distributed by the music-data-providing server 10 are encoded, they may not be transmitted nor reproduced to other devices except the headset 40.

Further, the present invention may provide various categories of contents in addition to the online music data distribution service through the headset 40.

Also, user convenience is improved by using various functions of the headset such as the intercom function.

While this invention has been described in connection with what is presently considered to be the most practical and preferred embodiment, it is to be understood that the invention is not limited to the disclosed embodiments, but, on the contrary, is intended to cover-various modifications and equivalent arrangements included within the scope of the appended claims.

## Claims

1. An online music-data-providing system comprising:
a music-data-providing server (10) for providing music data on line through a network;
a mobile communication system (20) connected to the network;
a mobile station (30) for wirelessly accessing the mobile communication system (20), and performing the Bluetooth^{™} protocol for short range radio links;
**characterized by**
a Bluetooth^{™} headset (40) having a first Bluetooth^{™} communication unit (400) for performing short range radio links by the Bluetooth^{™} protocol to the mobile station (30), for receiving the music data from the music-data-providing server (10) through the mobile station (30), and for reproducing them, and
the Bluetooth^{™} headset further comprising
a decompressor (430) for decoding the music data received from the mobile station (30) through the first Bluetooth^{™} communication unit (400), and decompressing them;
an audio output unit (440) for processing the music data decompressed by the decompressor (430), reproducing them, and outputting them so that a user may listen to them through a plurality of speakers (450) (460); and
a controller (420) for controlling the first Bluetooth^{™} communication unit (400), the decompressor (430), and the audio output unit (440), to control the operation of the headset (40).

2. The system of claim 1, wherein the Bluetooth^{™} headset (40) further comprises:
a voice coder (410), comprising a microphone (416) for receiving an external voice and outputting a corresponding voice signal, for converting the voice signal output from the microphone (416) into digital signals and outputting the same; and
wherein the controller (420) is also adapted to control the voice coder to control the whole operation of the headset (40).

3. The system of claim 2, wherein the music-data-providing server (10) is adapted to provide streaming music data and general music data, and the decompressor (430) is adapted to determine the type of the music data provided by the music-data-providing server (10) to perform a decompression operation.

4. The system of claim 3, wherein the decompressor (430) is adapted to decompress the music data in real-time while receiving the music data from the mobile station (30) and to output them to the audio output unit (440) when the music data are streaming music data, and the decompressor (430) is adapted to decode the music data and to decompress them after the music data are completely transmitted from the mobile station (30) when the music data are general music data.

5. The system of claim 4, wherein the decompressor (430) comprises:
a first decryptor (432) for decompressing streaming music data;
a decoder (434) for decoding general music data; and
a second decryptor (436) for decompressing the music data decoded by the decoder (434).

6. The system of claim 2, wherein the audio output unit (440) comprises:
a D/A converter (442) for converting the music data decompressed by the decompressor (430) into analog signals; and
an amplifier (444) for amplifying the analog signals output by the D/A converter (442) and outputting them to the speakers.

7. The system of claim 1, wherein the mobile station (30) comprises: a wireless transmitting and receiving unit (32) for receiving the music data from the music-data-providing server (10) through radio links to the mobile communication system (20);
a user interface (34) for receiving a user instruction, outputting it, and displaying predetermined information to the user;
a second Bluetooth^{™} communication unit (38) for performing short range radio links by the Bluetooth^{™} protocol to the Bluetooth^{™} headset (40); and
a controller (36) for controlling the wireless transmitting and receiving unit (32), the user interface (34), and the second Bluetooth^{™} communication unit (38) to control the whole operation of the mobile station (30).

8. The system of claim 1, wherein when an external telephone call request is provided to the mobile station (30) while the Bluetooth^{™} headset (40) receives predetermined music data from the music-data-providing server (10) and reproduces them, the Bluetooth^{™} headset (40) is adapted to temporarily or completely stop reproducing the predetermined music data, and perform a hands-free function on the mobile station (30).

9. The system of claim 8, wherein the temporarily stopped music data are reproduced again after the external telephone call is finished.

10. The system of claim 1, wherein when an external voice call access request is provided to the mobile station (30) while the Bluetooth^{™} headset (40) receives predetermined music data from the music-data-providing server (10), the Bluetooth^{™} headset (40) is adapted to temporarily or completely stop receiving the predetermined music data and perform a hands-free function on the mobile station (30).

11. The system of claim 10, wherein the temporarily stopped music data are received again after the external telephone call is finished.

12. The system of claim 1, wherein the Bluetooth^{™} headset (40) is adapted to call another Bluetooth^{™} headset (40) located in the vicinity of the Bluetooth^{™} headset (40).

13. The system of claim 1, wherein the Bluetooth^{™} headset is installed in a vehicle.

## Patentansprüche

1. Online-Musikdatenbereitstellungssystem, das aufweist:
einen Musikdatenbereitstellungsserver (10) zum Bereitstellen von Musikdaten online über ein Netz;
ein Mobilkommunikationssystem (20), das mit dem Netz verbunden ist;
eine Mobilstation (30) zum drahtlosen Zugreifen auf das Mobilkommunikationssystem (20) und zum Durchführen des Bluetooth^{™}-Protokolls für Funkverbindungen im Kurzbereich;
**gekennzeichnet durch**
eine Bluetooth^{™}-Sprechgarnitur (40), die eine erste Bluetooth^{™}-Kommunikationseinheit (400) zum Durchführen von Funkverbindungen im Kurzbereich durch das Bluetooth^{™}-Protokoll mit der Mobilstation (30) aufweist, um die Musikdaten von dem Musikdatenbereitstellungsserver (10) **durch** die Mobilstation (30) zu empfangen, und zum Reproduzieren dieser, und
wobei die Bluetooth^{™}-Sprechgarnitur außerdem aufweist:
einen Dekomprimierer (430) zum Dekodieren der Musikdaten, die von der Mobilstation (30) **durch** die erste Bluetooth^{™}-Kommunikationseinheit (400) empfangen werden, und zum Dekomprimieren dieser;
eine Audioausgabeeinheit (440) zum Verarbeiten der Musikdaten, die von dem Dekomprimierer (430) dekomprimiert werden, zum Reproduzieren dieser und zum Ausgeben dieser, so dass ein Nutzer mittels mehreren Lautsprechern (450) (460) zuhören kann; und
eine Steuerung (420) zum Steuern der ersten Bluetooth^{™}-Kommunikationseinheit (400), des Dekomprimierers (430) und der Audioausgabeeinheit (440), um den Betrieb der Sprechgarnitur (40) zu steuern.

2. System nach Anspruch 1, wobei die Bluetooth^{™}-Sprechgarnitur (40) außerdem aufweist:
einen Sprachkodierer (410), der ein Mikrofon (416) zum Empfangen einer externen Sprache und zum Ausgeben eines entsprechenden Sprachsignals aufweist, um das Sprachsignal, das von dem Mikrofon (416) ausgegeben wird, in digitale Signale zu wandeln und dieselben auszugeben; und
wobei die Steuerung (420) außerdem ausgelegt ist, den Sprachkodierer zu steuern, um den gesamten Betrieb der Sprechgarnitur (40) zu steuern.

3. System nach Anspruch 2, wobei der Musikdatenbereitstellungsserver (10) ausgelegt ist, Streaming-Musikdaten und allgemeine Musikdaten bereitzustellen, und der Dekomprimierer (430) ausgelegt ist, den Typ der Musikdaten, die von dem Musikdatenbereitstellungsserver (10) bereitgestellt werden, zu bestimmen, um einen Dekomprimierungsbetrieb durchzuführen.

4. System nach Anspruch 3, wobei der Dekomprimierer (430) ausgelegt ist, die Musikdaten in Echtzeit zu dekomprimieren, während die Musikdaten von der Mobilstation (30) empfangen werden, und diese an die Audioausgabeeinheit (440) auszugeben, wenn die Musikdaten Streaming-Musikdaten sind, und der Dekomprimierer (430) ausgelegt ist, die Musikdaten zu dekodieren und diese zu dekomprimieren, nachdem die Musikdaten vollständig von der Mobilstation (30) übertragen sind, wenn die Musikdaten allgemeine Musikdaten sind.

5. System nach Anspruch 4, wobei der Dekomprimierer (430) aufweist:
einen Dechiffrierer (432) zum Dekomprimieren von Streaming-Musikdaten;
einen Dekodierer (434) zum Dekodieren von allgemeinen Musikdaten; und
einen zweiten Dechiffrierer (436) zum Dekomprimieren der Musikdaten, die von dem Dekodierer (434) dekodiert werden.

6. System nach Anspruch 2, wobei die Audioausgabeeinheit (440) aufweist:
einen D/A-Wandler (442) zum Umwandeln der Musikdaten, die von dem Dekomprimierer (430) dekomprimiert werden, in analoge Signale; und
einen Verstärker (444) zum Verstärken der analogen Signale, die von dem D/A-Wandler (442) ausgegeben werden, und zum Ausgeben dieser an die Lautsprecher.

7. System nach Anspruch 1, wobei die Mobilstation (30) aufweist:
eine Drahtlos-Sende- und -Empfangseinheit (32) zum Empfangen der Musikdaten von dem Musikdatenbereitstellungsserver (10) mittels Funkverbindung mit dem Mobilkommunikationssystem (20);
eine Nutzerschnittstelle (34) zum Empfangen einer Nutzeranweisung, zum Ausgeben derselben und zum Anzeigen vorbestimmter Informationen für den Nutzer;
eine zweite Bluetooth^{™}-Kommunikationseinheit (38) zum Durchführen von Funkverbindungen im Kurzbereich mittels des Bluetooth^{™}-Protokolls mit der Bluetooth^{™}-Sprechgarnitur (40); und
eine Steuerung (36) zum Steuern der Drahtlos-Sende- und -Empfangseinheit (32), der Nutzerschnittstelle (34) und der zweiten Bluetooth^{™}-Kommunikationseinheit (38), um den gesamten Betrieb der Mobilstation (30) zu steuern.

8. System nach Anspruch 1, wobei, wenn der Mobilstation (30) eine externe Telefonrufanfrage bereitgestellt wird, während die Bluetooth^{™}-Sprechgarnitur (40) vorbestimmte Musikdaten von dem Musikdatenbereitstellungsserver (10) empfängt und diese reproduziert, die Bluetooth^{™}-Sprechgarnitur (40) ausgelegt ist, zeitweilig oder vollständig das Reproduzieren der vorbestimmten Musikdaten zu stoppen und eine Freihandfunktion an der Mobilstation (30) durchzuführen.

9. System nach Anspruch 8, wobei die zeitweilig gestoppten Musikdaten erneut reproduziert werden, nachdem der externe Telefonanruf beendet ist.

10. System nach Anspruch 1, wobei, wenn der Mobilstation (30) eine externe Sprachrufzugriffsanforderung bereitgestellt wird, während die Bluetooth^{™}-Sprechgarnitur (40) vorbestimmte Musikdaten von dem Musikdatenbereitstellungsserver (10) empfängt, die Bluetooth^{™}-Sprechgarnitur (40) ausgelegt ist, zeitweilig oder vollständig den Empfang der vorbestimmten Musikdaten zu stoppen und eine Freihandfunktion an der Mobilstation (30) durchzuführen.

11. System nach Anspruch 10, wobei die zeitweilig gestoppten Musikdaten erneut empfangen werden, nachdem der externe Telefonanruf beendet ist.

12. System nach Anspruch 1, wobei die Bluetooth^{™}-Sprechgarnitur (40) ausgelegt ist, eine andere Bluetooth^{™}-Sprechgarnitur (40) zu rufen, die in der Nähe der Bluetooth^{™}-Sprechgarnitur (40) angeordnet ist.

13. System nach Anspruch 1, wobei die Bluetooth^{™}-Sprechgarnitur in einem Fahrzeug installiert ist.

## Revendications

1. Système de fourniture de données musicales en ligne comprenant :
un serveur de fourniture de données musicales (10) pour fournir des données musicales en ligne par l'intermédiaire d'un réseau ;
un système de communication mobile (20) connecté au réseau ;
une station mobile (30) pour accéder de manière sans fil au système de communication mobile (20) et effectuer le protocole Bluetooth^{™} pour des liaisons radio à courte portée ;
**caractérisé par**
un casque Bluetooth^{™} (40) ayant une première unité de communication Bluetooth^{™} (400) pour effectuer des liaisons radio à courte portée par le protocole Bluetooth^{™} vers la station mobile (30), pour recevoir les données musicales en provenance du serveur de fourniture de données musicales (10) par l'intermédiaire de la station mobile (30) et pour les reproduire, et
le casque Bluetooth^{™} comprenant en outre
un décompresseur (430) pour décoder les données musicales reçues de la station mobile (30) par l'intermédiaire de la première unité de communication Bluetooth^{™} (400) et les décompresser ;
une unité de sortie audio (440) pour traiter les données musicales décompressées par le décompresseur (430), les reproduire et les sortir de sorte qu'un utilisateur puisse les écouter par l'intermédiaire d'une pluralité de haut-parleurs (450, 460) ; et
un contrôleur (420) pour contrôler la première unité de communication Bluetooth^{™} (400), le décompresseur (430), et l'unité de sortie audio (440), afin de contrôler le fonctionnement du casque (40).

2. Système selon la revendication 1, dans lequel le casque Bluetooth^{™} (40) comprend en outre :
un codeur vocal (410), comprenant un microphone (416) pour recevoir une voix extérieure et sortir un signal vocal correspondant, pour convertir le signal vocal sorti du microphone (416) en signaux numériques et les sortir ; et
dans lequel le contrôleur (420) est également adapté pour contrôler le codeur vocal afin de contrôler le fonctionnement entier du casque (40).

3. Système selon la revendication 2, dans lequel le serveur de fourniture de données musicales (10) est adapté pour fournir des données musicales en transit et des données musicales générales, et le décompresseur (430) est adapté pour déterminer le type des données musicales fournies par le serveur de fourniture de données musicales (10) afin d'effectuer une opération de décompression.

4. Système selon la revendication 3, dans lequel le décompresseur (430) est adapté pour décompresser les données musicales en temps réel tout en recevant les données musicales en provenance de la station mobile (30) et pour les sortir vers l'unité de sortie audio (440) lorsque les données musicales sont des données musicales en transit, et le décompresseur (430) est adapté pour décoder les données musicales et les décompresser après que les données musicales ont été transmises complètement depuis la station mobile (30) lorsque les données musicales sont des données musicales générales.

5. Système selon la revendication 4, dans lequel le décompresseur (430) comprend :
un premier déchiffreur (432) pour décompresser des données musicales en transit ;
un décodeur (434) pour décoder des données musicales générales ; et
un second déchiffreur (436) pour décompresser les données musicales décodées par le décodeur (434).

6. Système selon la revendication 2, dans lequel l'unité de sortie audio (440) comprend :
un convertisseur N/A (442) pour convertir les données musicales décompressées par le décompresseur (430) en signaux analogiques ; et
un amplificateur (444) pour amplifier les signaux analogiques sortis par le convertisseur N/A (442) et les sortir vers les haut-parleurs.

7. Système selon la revendication 1, dans lequel la station mobile (30) comprend : une unité d'émission et de réception sans fil (32) pour recevoir les données musicales en provenance du serveur de fourniture de données musicales (10) par l'intermédiaire de liaisons radio vers le système de communication mobile (20) ;
une interface utilisateur (34) pour recevoir une instruction d'utilisateur, la sortir et afficher des informations prédéterminées à l'utilisateur ;
une seconde unité de communication Bluetooth^{™} (38) pour effectuer des liaisons radio à courte portée par le protocole Bluetooth^{™} vers le casque Bluetooth^{™} (40) ; et
un contrôleur (36) pour contrôler l'unité d'émission et de réception sans fil (32), l'interface utilisateur (34), et la seconde unité de communication Bluetooth^{™} (38) afin de contrôler le fonctionnement entier de la station mobile (30).

8. Système selon la revendication 1, dans lequel une demande d'appel téléphonique extérieur est fournie à la station mobile (30) pendant que le casque Bluetooth^{™} (40) reçoit des données musicales prédéterminées en provenance du serveur de fourniture de données musicales (10) et les reproduit, le casque Bluetooth^{™} (40) est adapté pour arrêter temporairement ou complètement la reproduction des données musicales prédéterminées, et effectuer une fonction mains libres sur la station mobile (30).

9. Système selon la revendication 8, dans lequel les données musicales arrêtées temporairement sont reproduites à nouveau après que l'appel téléphonique extérieur est terminé.

10. Système selon la revendication 1, dans lequel une demande d'accès à l'appel téléphonique extérieur est fournie à la station mobile (30) pendant que le casque Bluetooth^{™} (40) reçoit des données musicales prédéterminées en provenance du serveur de fourniture de données musicales (10), le casque Bluetooth^{™} (40) est adapté pour arrêter temporairement ou complètement la réception des données musicales prédéterminées, et effectuer une fonction mains libres sur la station mobile (30).

11. Système selon la revendication 10, dans lequel les données musicales arrêtées temporairement sont reçues à nouveau après que l'appel téléphonique extérieur est terminé.

12. Système selon la revendication 1, dans lequel le casque Bluetooth^{™} (40) est adapté pour appeler un autre casque Bluetooth^{™} (40) situé à proximité du casque Bluetooth^{™} (40).

13. Système selon la revendication 1, dans lequel le casque Bluetooth^{™} (40) est installé dans un véhicule.
